# EUROPEAN PATENT APPLICATION

(11) **EP 1 749 765 A1**
(43) Date of publication of application: **07.02.2007**
(21) Application number: 06254071.1
(22) Date of filing: 03.08.2006
(51) Int. Cl.: B65G 43/10, B65G 47/26

(54) **An accumulation conveyor**

(30) Priority: 05.08.2005 GB 0516159
(71) Applicant: FKI Logistex Limited, Meadow Lane Loughborough, Leicestershire, LE11 1ZF (GB)
(72) Inventor: Warrilow, Jon, FKI Logistex Limited, Gainsborough Lincolnshire, DN21 1QE (GB)
(74) Representative: JENSEN & SON

(57) **Abstract**

An accumulation conveyor including a plurality of substantially identical conveyor modules (1, 2, 3, 4) secured linearly along a path to form said accumulation conveyor, each module having;
a plurality of rollers (7) arranged in spaced parallel relationship to provide a load supporting surface, at least one of said rollers comprising a drive roller (8), the remaining rollers (7) of the module being drivingly connected to the drive roller (8) for simultaneous rotation in the same direction,
an indicator device (9) to indicate the presence or absence of a load on the zone,
substantially identical electric control circuit looms (15) including; an input connector (10) adapted to be connected to a power source, an output connector (11) adapted to be connected to the input connector of the circuit loom (15) of an immediately downstream module.

## Description

The present invention relates to an accumulation conveyor comprising a plurality of zones each of which is selectively driveable to transport a load through the zone in dependence upon the load bearing status of the zone immediately downstream.

Typically, such accumulation conveyors are designed for a particular installation and the components are assembled on site to the required configurations. Once the conveyor is assembled, it is necessary to provide the electrical wiring circuitry for the conveyor and in the known construction techniques, this requires the services of a skilled electrician to wire up each conveyor and the components on it in accordance with a circuit plan designed as part of the installation. This is a time consuming and hence expensive part of the installation since it necessitates the use of skilled personnel. Further expense and delay is incurred because it is not possible for the engineers in charge of the commissioning of the installation to complete their work until after the electrical installation has been completed.

The present invention seeks to provide an accumulation system constructed in accordance with an interchangeable modular conception, which significantly reduces the cost of installation and subsequent maintenance.

According to the present invention there is provided an accumulation conveyor including a plurality of zones, each zone comprising a conveyor module, the modules being secured by securing means linearly along a path to form said accumulation conveyor, each module having;
a plurality of rollers arranged in spaced parallel relationship to provide a load supporting surface, at least one of said rollers comprising a drive roller, the remaining rollers of the module being drivingly connected to the drive roller for simultaneous rotation in the same direction,
an indicator device to indicate the presence or absence of a load on the zone,
an electric control circuit loom including; an input connector adapted to be connected to a power source, an output connector adapted to be connected to the input connector of the circuit loom of an immediately downstream module, an input connector from the output of the indicator device and an output connector to the drive roller, the securing means and the loom connectors being common on all modules such that the modules in the conveyor are interchangeable.

In a preferred embodiment, the conveyor further includes switch means responsive to signals from the indicator device to control the supply of power to the drive roller, an electrical lead adapted to be connected between said indicator device and an indicator device of the immediately upstream module to enable signals to be transmitted between the devices.

Preferably, said switch means is incorporated in the indicator device or in the control circuit loom itself, and the indicator device on each module prefereably comprises an optical presence detector.

In another preferred embodiment, each module is substantially identical so that the modules are interchangeable. Preferably, each loom is substantially identical so that the looms for each module are interchangeable.

To facilitate assembly on site, the loom connectors are preferably plug-in connectors.

Preferably, the drive roller comprises a motorised roller having an electric motor incorporated therein.

A preferred embodiment of the present invention will now be described by way of example with reference to the accompanying drawings in which:-
Figure 1 shows a plan view of an accumulation conveyor
Figure 2 shows a side view of the accumulation conveyor of Figure 1, and
Figure 3 shows a schematic view of a wiring diagram of an accumulation conveyor having four zones.

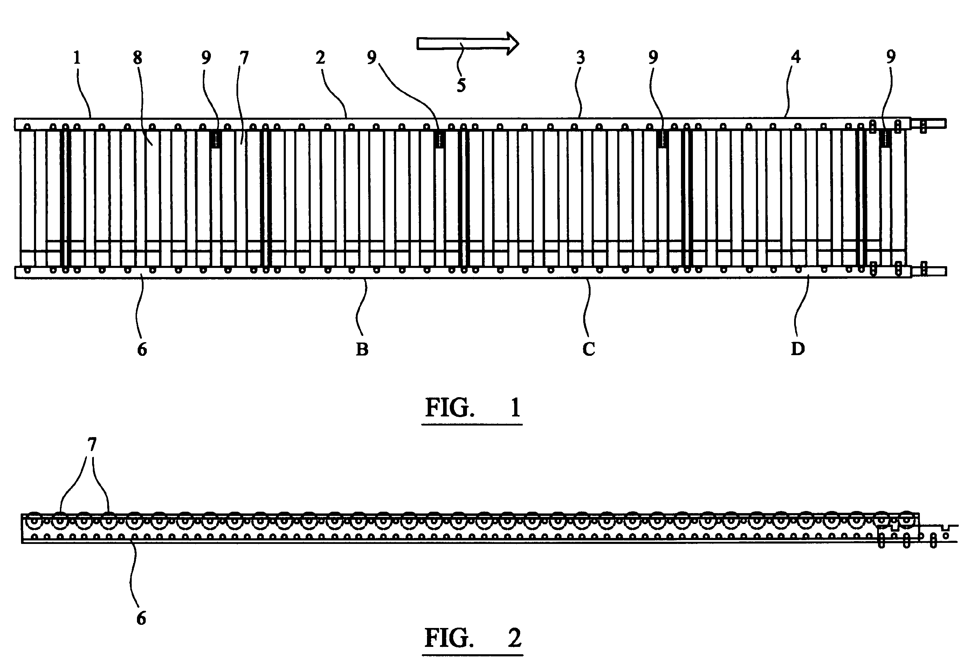

Referring now to Figure 1 there is shown a plan view of an accumulation conveyor having four zones 1, 2, 3, 4 arranged linearly along the direction of travel of a load passing through the conveyor indicated by the arrow 5, so that zone 1 is the upstream end of the accumulation conveyor and zone 4 the downstream end.

Each zone consists of a conveyor module and the modules are substantially identical so as to be interchangeable. Each module has a frame 6 supporting eight conveyor rollers 7 of identical diameter in spaced parallel relationship, the upper profile of which provides a load supporting surface. In each zone one of the intermediate rollers comprises a drive roller 8, which incorporates within the roller an electric motor for rotating the roller. The remaining rollers of the module are connected sequentially to the drive roller by a series of drive bands so that the drive roller 8 is able to drive all rollers simultaneously in the same direction.

Each module incorporates an optical presence detector 9 which is adapted to indicate the presence or absence of a load on the module.

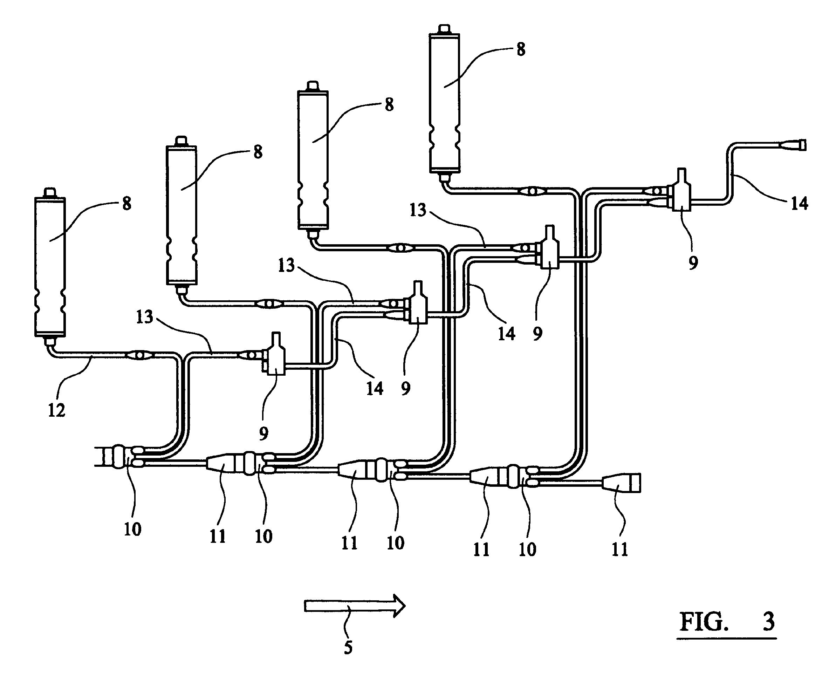

Referring now to Figure 3 there is shown in schematic form a wiring diagram of the four modules of the accumulation conveyor. The wiring for each module comprises a pre-assembled loom 15. The looms for each module are substantially identical so as to be interchangeable. Each loom 15 consists of an input connector 10 adapted to be connected to a source of power for the drive roller 8, the input connector 10 being connected, through connector 11, to the drive roller 8 by a power lead 12 carrying a plug-in connector adapted to be plugged into the electric motor of the drive roller 8. The input connector 10 has an output power lead connected to an output connector 11 adapted to be connected by a plug in connection to the input connector 10 of an adjacent downstream module. Each loom 15 also comprises a connector 13 to the presence detector and a connector 12 to the drive roller 8.

The indicator device 9 incorporates logic circuitry to control a switch responsive to the presence of a load and the status of the downstream indicator device 9 to control the supply of power to the drive roller 8. The loom 15 supplies power to the drive roller 8 and carries all the necessary interconnections between the detector 9 and drive roller 8. The connections 12 and 13 are of a 'plug-in' style to the drive roller 8 and presence detector 9 respectively. From every presence detector 9 a control lead 14 emerges and has a plug-in connector that is used to connect the presence detector 9 of its module to the presence detector 9 of the module immediately downstream, so that the presence detector 9 on the first module is responsive to the load status of the adjacent downstream module.

When the module is the module comprising the last zone 4 of the accumulation conveyor, the control lead 14 simply connects to a power source to supply the presence detector 9 connected to this lead and all other presence detectors 9 of other modules connected in series to it.

In operation, loads, such as cardboard boxes, are supplied to the accumulation conveyor along a conveyor track, which may be powered or gravity. When a load is supplied to the first zone 1 of the accumulation conveyor, its presence is detected by the presence detector 9. The presence detector 9 is also responsive to the load status of the second zone 2. If there is no load in the second zone 2, a signal is transmitted from the detector of that zone 2 to the detector of the first zone 1 which, in turn, switches the power on for the drive roller in the first zone 1. The rollers of the first zone 1 then drive the load into the second zone 2.

If, on the other hand, the presence detector of the second zone 2 indicates the presence of a load in this zone, no signal is sent to the presence detector 9 of the first zone 1 which then does not initiate operation of the drive rollers of this zone.

When all four zones are occupied by loads, the output signals of the presence detectors indicative of the presence of a load serve to stop power being supplied to the drive rollers of all four zones, with the result that the conveyed loads are accumulated and not touching one another. Immediately a load is removed from the fourth zone 4, a signal indicative of this is sent from its presence detector 9 to the presence detector of the immediately upstream zone 3 to initiate rotation of the drive roller in zone 3 to thereby transfer the load on this zone to the fourth zone 4. Once the zone 3 is empty, the appropriate signal is sent to the detector of zone 2 to initiate rotation of the rollers in this zone if the detector of zone 2 detects the presence of a load in its zone.

If a presence detector 9 does not detect a load for a selected time period, 10 seconds in the preferred embodiment described here, it switches off the drive roller 8 of its zone. This state is called 'sleep mode' and saves electrical power and unnecessary mechanical wear and tear. If a presence detector 9, in a zone up stream of a zone that has gone to sleep, detects a load then a 'wake up' signal is sent via cable 14 to the downstream presence detector 9 which starts its drive roller 8 ready to receive the travelling load. To 'wake up' zone 1 if it is in 'sleep mode' then a conventional photo eye is mounted on the discharge end of the conveyor that feeds zone 1. This photo eye is connected into the unused connection port of the presence detector 9 of the first zone.

Although described as an accumulation conveyor with four zones, it will be appreciated that as many zones as required may be provided without departing from the module concept.

The present invention has the advantage that the modules can be ready prepared off-site in the number required. The ease of wiring means the conveyor modules could be supplied as a flat pack module for easy transport, whilst the looms are similarly prepared in advance as a stock item for the module. Therefore, the assembly of the accumulation conveyor on site and the time occupied on site is greatly reduced compared with known arrangement. This has the advantage that not only is the assembly quicker and therefore more economic, it does not need the presence of skilled electricians and furthermore any downtime of the system is much shorter, leading to further cost savings in existing plant and in commissioning new plant. The modular concept has the advantage in that if there is, for example, a failure in the loom it can simply be replaced on site without any delay and without the use of a skilled electrician. The plug-in connectors between the loom and presence detector and loom and drive roller mean these components can also be replaced without the need for a skilled electrician. Furthermore it is extremely easy to convert a non-accumulating conveyor powered by drive rollers to an accumulating one as described herein.

## Claims

1. An accumulation conveyor including a plurality of zones (1, 2, 3, 4), each zone comprising a conveyor module, the modules being secured by securing means linearly along a path to form said accumulation conveyor, each module having;
a plurality of rollers 7 arranged in spaced parallel relationship to provide a load supporting surface, at least one of said rollers comprising a drive roller (8), the remaining rollers of the module being drivingly connected to the drive roller (8) for simultaneous rotation in the same direction,
an indicator device (9) to indicate the presence or absence of a load on the zone, **characterised in that** each module has:
an electric control circuit loom (15) including an input connector (10) adapted to be connected to a power source, and an output connector (11) adapted to be connected to the input connector (10) of the circuit loom of an immediately downstream module, the securing means and the loom connectors (10, 11) being common on all modules such that the modules in the conveyor are interchangeable.

2. A conveyor according to claim 1, further including switch means responsive to signals from the indicator device (9) to control the supply of power to the drive roller (8), an electrical lead (14) adapted to be connected between said indicator device (9) and an indicator device (9) of the immediately upstream module to enable signals to be transmitted between the devices (9).

3. A conveyor according to claim 1 or 2, further including a timer responsive to the absence of a load in the zone to switch off power to the drive roller (8) of said zone when the absence of a load has been indicated for a predetermined length of time.

4. A conveyor according to claim 2 or 3, wherein said switch means is incorporated in the input connector (10).

5. A conveyor according to claim 2 or 3, wherein the switch means is incorporated in the indicator device (9).

6. A conveyor according to any one of claims 1 to 5, wherein the indicator device (9) on each module comprises an optical presence detector.

7. A conveyor according to according to any one of claims 1 to 6, wherein each module is substantially identical so that the modules are interchangeable.

8. A conveyor according to any one of the preceding claims wherein each loom (15) is substantially identical so that the looms for each module are interchangeable.

9. A conveyor according to any one of the preceding claims wherein the loom connectors (10, 11) are plug-in connectors.

10. A conveyor according to any one of the preceding claims, wherein the drive roller (8) comprises a motorised roller having an electric motor incorporated therein.
